# EUROPEAN PATENT SPECIFICATION

(11) **EP 0 638 337 B1**
(45) Date of publication and mention of the grant of the patent: **10.03.1999**
(21) Application number: 94305548.3
(22) Date of filing: 27.07.1994
(51) Int. Cl.: A63B 37/00, C08L 23/08

(54) **Golf ball**
Golfball
Balle de golf

(30) Priority: 06.08.1993 JP 215276/93
(43) Date of publication of application: 15.02.1995
(73) Proprietor: SUMITOMO RUBBER INDUSTRIES, LTD., Hyogo-ken (JP)
(72) Inventor: Hamada, Akihiko, Hakogawa-shi, Hyogo-ken (JP); Yabuki, Yoshikazu, Hyogo-ken (JP); Kato, Akira, Hyogo-ken (JP)
(74) Representative: Allard, Susan Joyce

(56) References cited:
- EP-A- 0 534 779
- FR-A- 2 625 909
- GB-A- 2 247 682
- US-A- 4 986 545

## Description

The present invention relates to a golf ball. More particularly, it relates to a golf ball having excellent shot feel control properties and flying performance.

Recently, an ionomer resin has been used as the base resin for the cover of the golf ball (e.g. Japanese Laid-Open Patent Publication No. 49-49727). Particularly, the ionomer resin is exclusively used in two-piece golf balls which have solid cores.

This is because ionomer resin is superior in durability, cut resistance and impact resilience and, further, it is easily processed and inexpensive in comparison with other base resins which may be used for the cover.

However, the ionomer resin is inferior in shot feel and control properties (ease of putting spin on the ball) in comparison with a balata cover used as the base resin for the cover of thread wound golf balls since the ionomer resin has considerably high hardness and stiffness.

Therefore, Japanese Laid-Open Patent Publication No. 1-308577 suggests to soften a high-rigid ionomer resin to improve shot feel and control properties by blending (mixing) a soft ionomer resin comprising a sodium or zinc salt of a terpolymer of an α-olefin, an unsaturated monocarboxylic acid having 3 to 8 carbon atoms and an unsaturated monomer of an acrylate ester having 2 to 22 carbon atoms with the high-rigid ionomer resin.

However, even if the soft ionomer resin as described above is blended golf balls are still not obtained which have similar shot feel to golf balls with a balata cover.

The balata cover is characterized by the fact that stiffness is comparatively high in spite of it's considerably low hardness, which enables golf balls with a balata cover to have excellent control properties and shot feel.

However, in the method of blending the soft ionomer resin described in Japanese Laid-Open Patent Publication No. 1-308577, when trying to obtain the hardness similar to that of the balata cover is made, the stiffness becomes either too low or too high in comparison with the balata cover.

In both cases, shot feel of the resulting golf ball is quite different from that of the golf balls with a balata cover.

In addition to the above suggestion, various trials of softening the ionomer resin to improve the shot and control properties have been made. However, satisfactory results have not been obtained.

As described above, golf balls with a ionomer resin cover are inferior in shot feel and control properties in comparison with the thread wound golf balls with a balata cover because the ionomer resin has high hardness and stiffness. Further, previous efforts to soften the ionomer resin to improve shot feel and control properties have yet to succeed.

Under these circumstances, in order to satisfy the requirement for both excellent shot feel and flying performances, the present inventors have intensively studied the base resin for the ball cover. As a result, it has been found that by blending (mixing) a low-hardness copolymer resin having a specific structure with a high-rigid ionomer resin, a cover having a hardness and stiffness which are similar to those of the balata cover can be obtained. The resulting golf ball has excellent shot feel and control properties as well as flying performance and cut resistance.

GB-A-2 247 682 relates to hard-soft ionomeric mixtures for golf ball cover compositions.

The present invention provides a golf ball having excellent shot feel, control properties and flying performance.

The present invention provides a golf ball having a core and a cover for coating the core, wherein the cover comprises a base resin comprising a mixture of a resin (A) and a resin (B), the cover having a Shore D-scale hardness and a stiffness of from 40 to 55 and 130 to 300 MPa respectively,
wherein resin (A) comprises an ionomer resin obtained by neutralizing at least a part of carboxyl groups in a copolymer of an α-olefin and an α,β-unsaturated carboxylic acid having from 3 to 8 carbon atoms with a metal ion or a mixture thereof, resin (A) having a Shore D-scale hardness and a stiffness of from 60 to 70 and 300 to 500 MPa respectively,
and wherein resin (B) comprises a low-hardness copolymer resin comprising an α-olefin, an α,β-unsaturated carboxylic ester having from 3 to 8 carbon atoms and a polymerizable monomer containing a carboxyl group or a carboxylic anhydride group as an essential monomer component, resin (B) having a Shore D-scale hardness of from 5 to 30.

In the present invention, the resin (A) as one component of the base resin of the cover is a so-called high-rigid ionomer resin obtained by neutralizing at least a part of carboxyl groups in a copolymer of an α-olefin and an α, β-unsaturated carboxylic acid having 3 to 8 carbon atoms with a metal ion, which becomes a factor for producing excellent flying performances and durability.

Examples of the α-olefin, include ethylene, propylene, 1-butene, or 1-pentene. Among them, ethylene is particularly preferred. Examples of the α,β-unsaturated carboxylic acids having 3 to 8 carbon atoms include acrylic acid, methacrylic acid, fumaric acid or maleic acid. Preferred are acrylic acid and methacrylic acid. The weight ratio of the α-olefin to the α, β-unsaturated carboxylic acid having 3 to 8 carbon atoms is normally in the range of from 80 to 90% by weight/10 to 20% by weight. Examples of the metal ion for neutralizing at least a part of carboxyl groups in the copolymer thereof include sodium ion, lithium ion, zinc ion or magnesium ion

It is necessary that the Shore D-scale hardness and stiffness of the resin (A) are within a range of 60 to 70 and 300 to 500 MPa respectively, in order to accomplish low hardness, e.g. Shore D-scale hardness of about 40 to 55, preferably 43 to 53, similar to that of the balata cover, while maintaining the level of the balata cover having comparatively high rigidity, e.g. stiffness of 130 to 300 MPa.

Examples of the resin (A) include high-rigid ionomer resins commercially available from Mitsui Du Pont Polychemical Co., Ltd. under the trade name of Hi-milan #1605 (Na), Hi-milan #1707 (Na), Hi-milan AM7318 (Na), Hi-milan AM7315 (Zn) and Hi-milan 7317 (Zn); high-rigid ionomer resins commercially available from Du Pont U.S.A. Co. under the trade name of Surlyn #8940 (Na), Surlyn #8920 (Na) and Surlyn #7940 (Li); and high-rigid ionomer resins commercially available from Exxon Chemical Co. under the trade name of Iotek 8000 (Na). Na, Li or Zn described in parentheses after the trade name of the ionomer resin respectively indicates the type of a metal ion for neutralizing the ionomer resin.

In the present invention, as the resin (A), a mixture of an ionomer resin neutralized with a monovalent metal ion and an ionomer resin neutralized with a divalent metal ion wherein both/either ionomer resins are the above high-rigid ionomer resins is particularly preferred in comparison with a mixture of the above high-rigid ionomer resin alone or ionomer resins neutralized with the same kinds of metal ions. This is because high rigidity and high impact resilience can be more easily obtained.

Examples of the combination of the ionomer resin neutralized by the monovalent metal ion and ionomer resin neutralized with the divalent metal ion include Hi-milan #1605 (Na)/Hi-milan #1706 (Zn), Hi-milan #1605 (Na)/ Surlyn AM7317 (Zn), Hi-milan #7940 (Li)/Hi-milan #1706 (Zn), Surlyn AM7317 (Zn)/Surlyn AM7318 (Na), Surlyn AM7318 (Na)/Hi-milan #1706 (Zn),or Iotek 8000 (Na)/Iotek 7010 (Zn).

The resin (B) is a low-hardness copolymer resin comprising an α-olefin, an α, β-unsaturated carboxylic acid ester having 3 to 8 carbon atoms and a polymerizable monomer containing a carboxyl group or a carboxylic anhydride group as an essential monomer component, wherein the Shore D-scale hardness is in the range of from 5 to 30. The resin (B) enables the resin (A) to soften into a desired state without deterioration of impact resilience or durability.

Examples of the α-olefin used as the monomer component of the resin (B) include ethylene, propylene, 1-butene, or 1-pentene. Among them, ethylene is particularly preferred.

Examples of the α, β-unsaturated carboxylic acid ester having 3 to 8 carbon atoms as the monomer component of the resin (B) include an alkyl (e.g. methyl, ethyl, propyl, n-butyl, or isobutyl) ester of acrylic acid, methacrylic acid, fumaric acid or maleic acid. Among them, acrylate ester and methacrylate ester are particularly preferred.

Examples of the polymerizable monomer containing the carboxyl group or anhydrous carboxylic group in the resin (B) include acrylic acid, methacrylic acid, anhydrous maleic anhydride, fumaric acid, itaconic acid or a half ester of a dibasic acid such as maleic acid, fumaric acid or itaconic acid. In the resin (B), the polymerizable monomer containing the carboxyl group or carboxylic anhydride group is used as the third component in order to improve compatibility with resin (A) as the high-rigid ionomer resin by the presence of a polar group such as carboxyl group or carboxylic anhydride group contained therein to accomplish uniform dispersion of resin (B) as the low-hardness copolymer resin into resin (A).

The composition ratio of resin (B) to the respective components may be any one which enables resin (B) to have the Shore D-scale hardness in the range of from 5 to 30. Normally, it is preferred that the amount of the α-olefin, α, β-unsaturated carboxylic acid ester having 3 to 8 carbon atoms and polymerizable monomer containing the carboxyl group or carboxylic anhydride group are in the range of 55 to 79% by weight, 20 to 40% by weight and 1 to 5% by weight, respectively.

The mixing ratio of resin (A) to resin (B) may be any one which accomplish the hardness and stiffness within the above range. Normally, when the mixing ratio of resin (A) to resin (B) is 70:30 to 50:50 (weight ratio), the resulting hardness and stiffness is within a suitable range.

In the present invention, the Shore D-scale hardness and stiffness of the cover are specified as in the range of from 40 to 55 and 130 to 300 MPa respectively. The reason thereof is as follows:

When the Shore D-scale hardness is lower than 40, the resulting cover is too soft. On the other hand, when the Shore D-scale hardness is higher than 55, the resulting cover is too hard. In both cases, good shot feel similar to the golf ball with the balata cover cannot be obtained. Similarly when the stiffness deviates from the above specific range, good shot feel similar to the golf ball with balata cover is not easily obtained. At the same time
When the stiffness is lower than 130 MPa, the cover becomes too soft and the amount of spin of the ball becomes too large, which results in deterioration of flying distance. On the other hand, when the stiffness is higher than 300 MPa a suitable backspin amount is not obtained, which results in deterioration of control properties.

The Shore D-scale hardness in the range of from 40 to 55 and stiffness in the range of 130 to 300 Mpa of the cover of the present invention correspond to those of the balata cover. The reason why comparatively high stiffness and excellent durability (cut resistance) can be obtained in the present invention by blending resin (A) with resin (B) in spite of it's comparatively low hardness to the balata cover is that uniform dispersibility of resin (B) into resin (A), the high-rigid ionomer resin is improved by an action of the carboxyl group or anhydrous maleic group contained in the resin (B), the low-hardness copolymer resin. It is also due to resin (B) having extremely high flexibility and thus a desired hardness can be obtained by blending a comparatively small amount of resin (B).

Further, one of the reasons why the golf ball with the cover of the present invention can have excellent impact resilience and flying performances is that resin (B) has rubber elasticity superior in flexibility and impact resilience.

The reason why the Shore D-scale hardness and stiffness of the resin (A) in the respective resin components are specified on the range from 60 to 70 and 300 to 500 Mpa respectively, is as follows:

When the Shore D-scale hardness of resin (A) is lower than 60, the Shore D-scale hardness of the cover becomes lower than 40 when resin (B) is blended so that it becomes difficult to maintain the Shore D-scale hardness of the cover within the range of from 40 to 55. On the other hand, when the Shore D-scale hardness of resin (A) is higher than 70, the Shore D-scale hardness of the cover is greater than 55 when resin (B) is blended so that it becomes difficult to maintain the Shore D-scale hardness of the cover within the range of from 40 to 55.

When the stiffness of resin (A) is lower than 300 MPa, the stiffness of the cover becomes smaller than 130 MPa when resin (B) is blended so that it becomes difficult to maintain the stiffness of the cover within the range of from 130 to 300 MPa. On the other hand, when the stiffness of resin (A) is higher than 500 MPa, the stiffness of the cover is greater than 300 MPa when resin (B) is blended so that it becomes difficult to maintain the stiffness of the cover within the range of from 130 to 300 MPa.

The reason why the Shore D-scale hardness of resin (B) is specified to 5 to 30 is as follows: When the Shore D-scale hardness of resin (B) is lower than 5, the Shore D-scale hardness of the cover is liable to become smaller than 40 when resin (B) is blended with resin (A). On the other hand, when the Shore D-scale hardness of resin (B) is higher than 30, resin (A) cannot be sufficiently softened while maintaining the constant stiffness when resin (B) is blended with resin (A). Thus it becomes difficult to maintain the Shore D-scale hardness of the cover within the range of from 40 to 55.

If necessary, various additives such as pigments, dispersants, antioxidants, UV absorbers, or photostabilizers, can be formulated in the cover used in the present invention, in addition to the base resin of the mixture of resins (A) and (B).

Further, a golf ball can be obtained by coating the cover on the core. As the core, any core known in the art for solid golf balls or thread wound golf balls can be used.

The solid core may be a core having two or more layers for a multi-layer golf ball. For example, as the core for a two-piece golf ball, those obtained by subjecting a rubber composition to a press vulcanization to compress with heating (e.g. at a temperature of 140 to 170°C for 10 to 40 minutes) into a spherical vulcanized article can be used. The rubber composition is prepared by formulating 10 to 60 parts by weight of at least one vulcanizing agent (crosslinking agent) of α, β-ethylenically unsaturated carboxylic acids (e.g. acrylic acid, methacrylic acid, etc.) or metal salts thereof and functional monomers (e.g. trimethylolpropane trimethacrylate, etc.), 10 to 30 parts by weight of a filler (e.g. zinc oxide, barium sulfate, etc.), 0.5 to 5 parts by weight of a peroxide (e.g. dicumyl peroxide, etc.) and 0.1 to 1 parts by weight of an antioxidant, based on 100 parts by weight of polybutadiene.

A thread wound core is composed of a center and a thread rubber wound on the center. As the center, any liquid center or rubber center known in the art can be used. As the rubber center, there can be used those obtained by vulcanizing the same rubber composition as that of the solid core.

The thread rubber may be those which have hitherto been used. For example, there can be used those obtained by vulcanizing a rubber composition wherein an antioxidant, a vulcanizing accelerator andsulphur are formulated in a natural rubber or a natural rubber and synthetic polyisoprene. Cores are not limited to the solid core and thread wound core.

A method of coating the cover on the core is not specifically limited, but may be be any method known in the art. For example, there can be employed a method comprising molding a composition for the cover prepared by formulating a suitable amount of a requisite additive in the specific base material for the cover into a semi-spherical half-shell in advance, covering a core with two half-shells and then subjecting to pressure molding at 130 to 170°C for 1 to 5 minutes. Alternatively a method comprising subjectng the composition for the cover to an injection molding directly to cover the core may be used. The thickness of the cover is normally about 1 to 3 mm. In the case of cover molding, a dimple may be formed on the surface of the ball, if necessary. Further, if necessary, a paint or marking may be provided after cover molding.

As described above, according to the present invention, a golf ball having excellent shot feel control properties and flying performance is obtained.

The following Examples and Comparative Examples further illustrate the present invention in detail.

### Examples 1 to 7 and Comparative Examples 1 to 7 (Thread wound golf ball)

### (1) Preparation of core

A thread wound core having an outer diameter of 39.5 mm was prepared by winding a thread rubber comprising a natural rubber/low-cis IR [Shell IR-309 (trade name)](= 50:50) as the base rubber on a liquid center having an outer diameter of 28.1 mm, said liquid center comprising a paste obtained by dispersing barium sulfate in water and a center bag of a vulcanized natural rubber having a thickness of 1.7 mm, which covers the paste.

### (2) Preparation of composition for cover

Regarding Preparation Examples 1 to 7 and Comparative Preparation Examples 1 to 6, formulation components shown in Tables 1 and 2 were mixed by a kneading type twin-screw extruder to prepare a pelletized composition for the cover. Regarding Comparative Preparation Example 7, a component shown in Table 2 was mixed by a roll and the mixture was extruded by calendering to obtain a sheet-like composition for cover.

The formulations of Preparation Examples 1 to 7 are shown in Table 1 and those of Comparative Preparation Examples 1 to 6 are shown in Table 2. The formulation materials of which trade names are shown in Table 1 and Table 2 will be explained at the back of Table 2. In the explanation about the formulation materials, MI is an abbreviation for Melt Index. The amount of each component in Tables 1 and 2 is parts by weight.

The extrusion conditions are as follows: screw diameter: 45 mm; screw revolution per minute: 200 rpm; screw L/D: 35. The formulation components were heated at 200 to 250°C at the die position of the extruder.

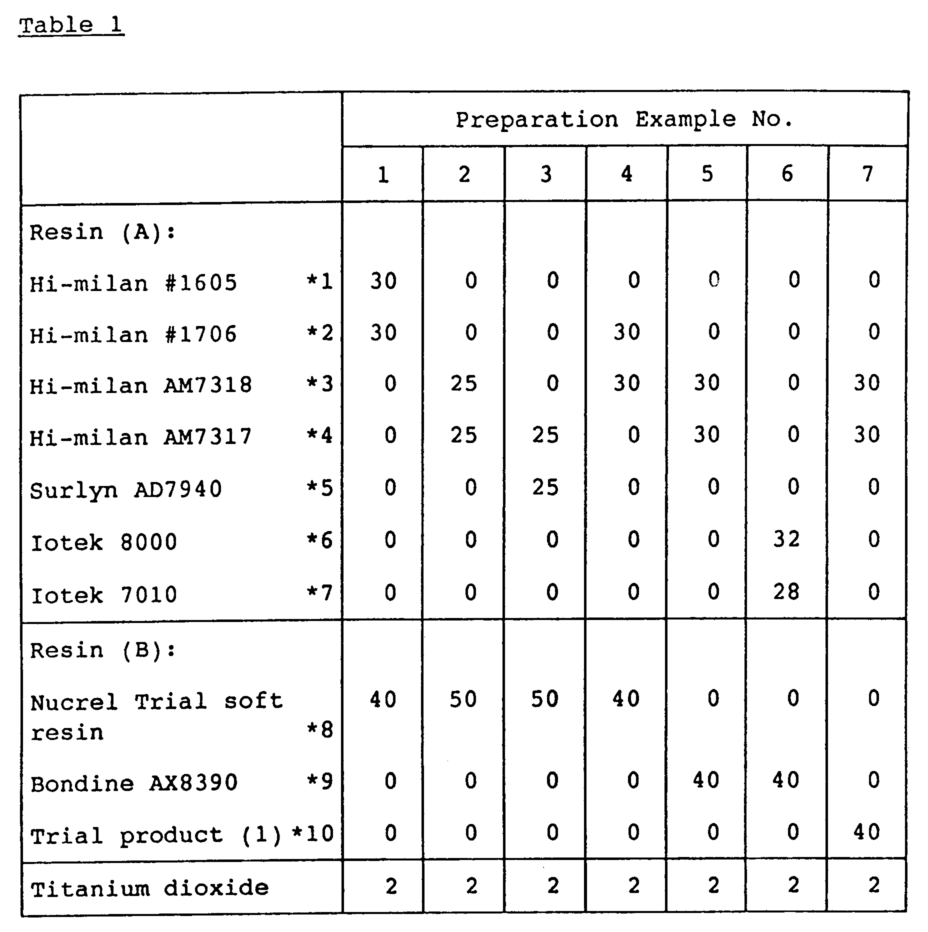

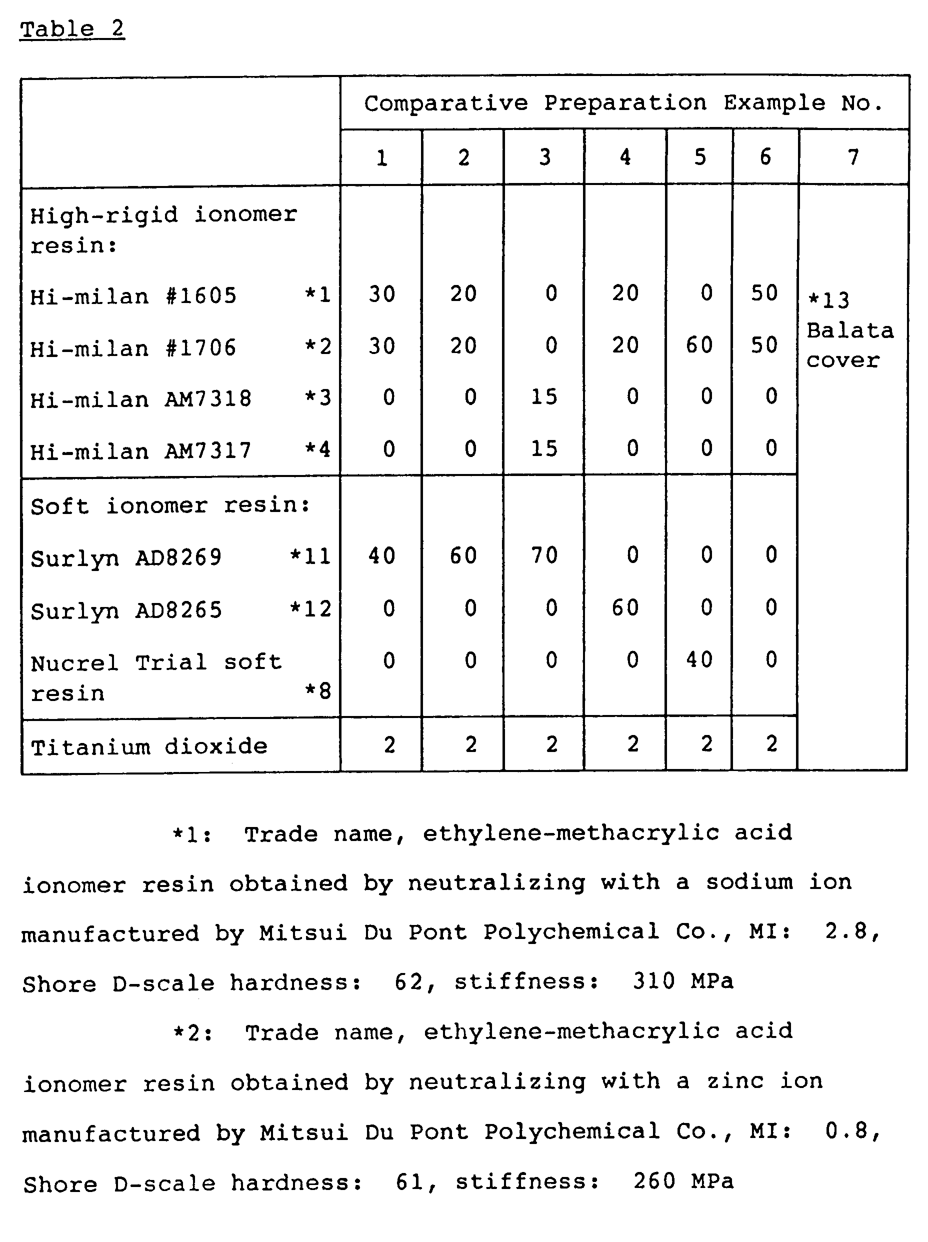

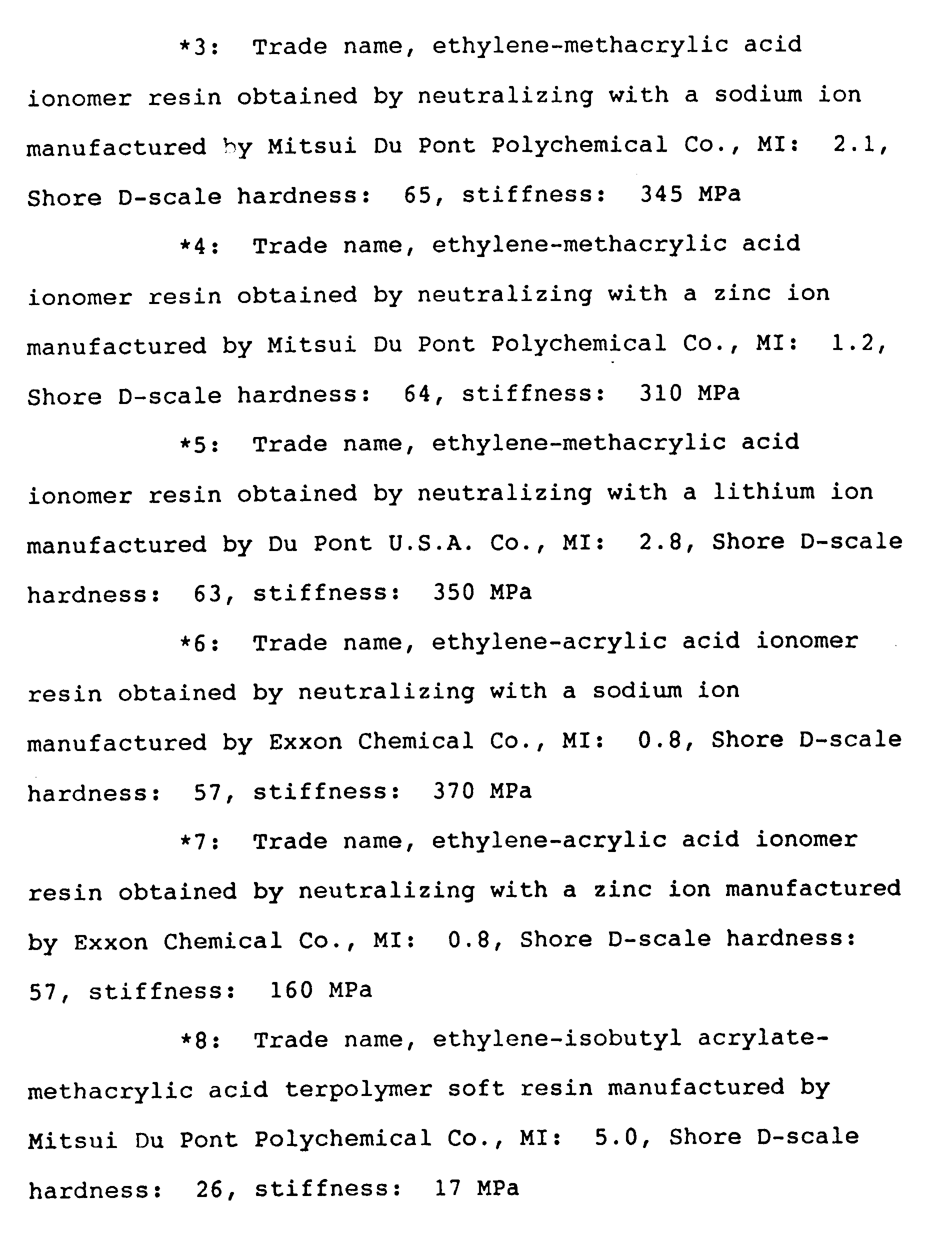

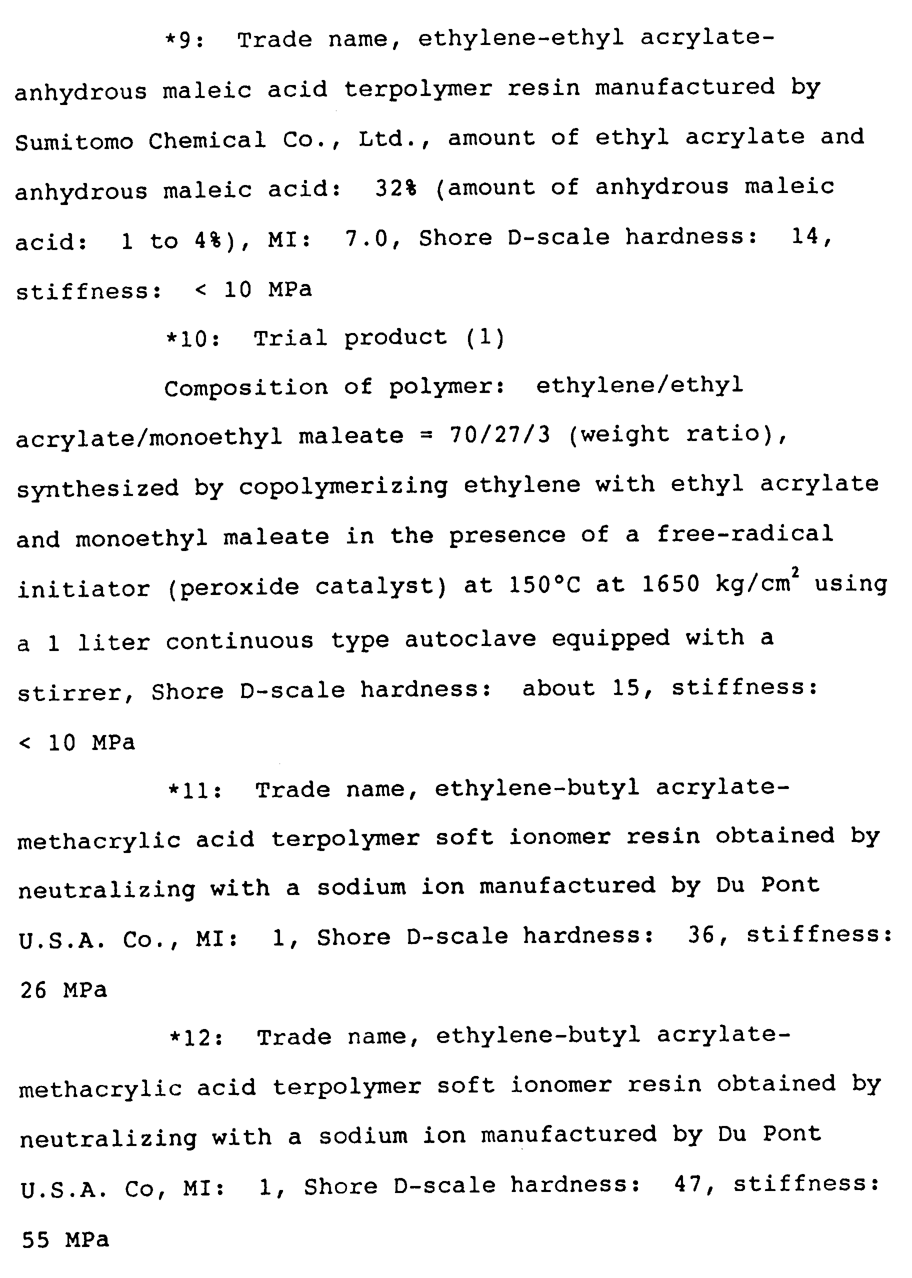

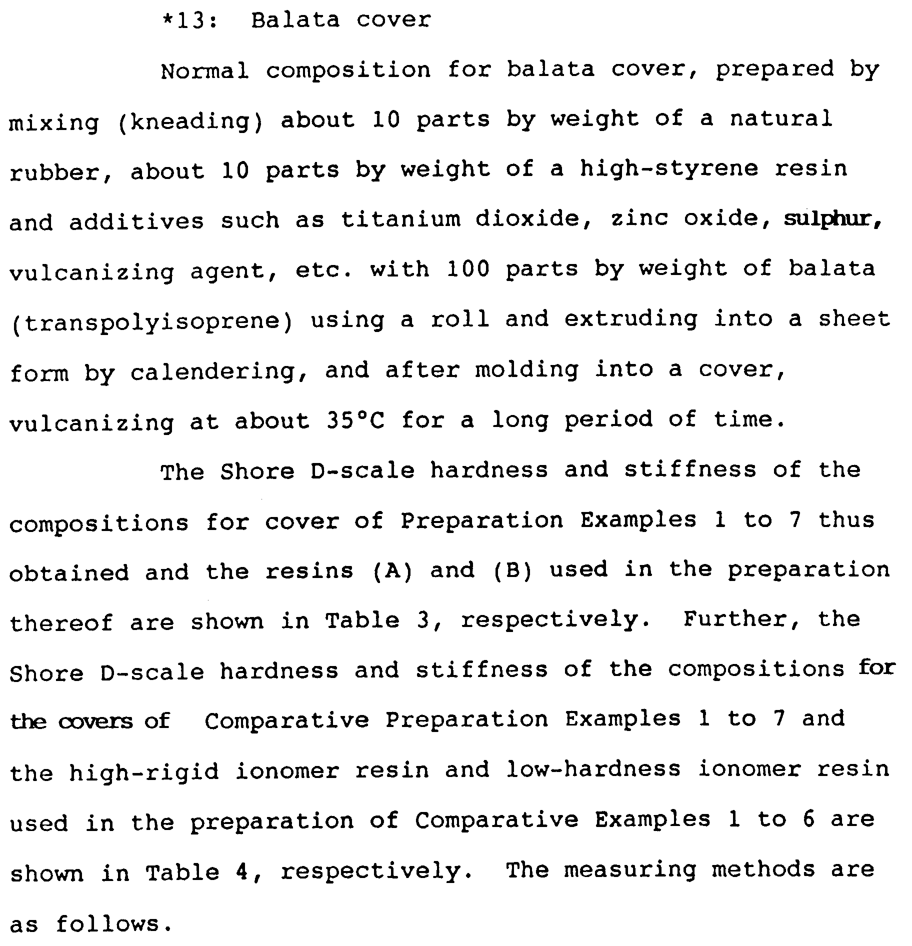

### Shore D-scale hardness:

Measured according to ASTM D-2240 after a sheet having a thickness of about 2 mm obtained by heat-press molding was preserved at 23°C for two weeks.

### Stiffness:

Measured according to ASTM D-747 after a sheet having a thickness of about 2 mm obtained by heat-press molding was preserved at 23°C for two weeks.

**Table 3**

| | Preparation Example No. | | | | | | |
|---|---|---|---|---|---|---|---|
| | 1 | 2 | 3 | 4 | 5 | 6 | 7 |
| Resin (A): | | | | | | | |
| ① Hardness (Shore D-scale hardness) | 63 | 65 | 65 | 64 | 65 | 63 | 65 |
| ② Stiffness (MPa) | 340 | 410 | 420 | 380 | 410 | 380 | 410 |

| Resin (B): | | | | | | | |
|---|---|---|---|---|---|---|---|
| ① Hardness (Shore D-scale hardness) | 26 | 26 | 26 | 26 | 14 | 14 | 15 |
| ② Stiffness (MPa) | 17 | 17 | 17 | 17 | <10 | <10 | <10 |

| Composition for cover: | | | | | | | |
|---|---|---|---|---|---|---|---|
| ① Hardness (Shore D-scale hardness) | 50 | 47 | 47 | 50 | 50 | 48 | 50 |
| ② Stiffness (MPa) | 150 | 160 | 170 | 180 | 220 | 200 | 210 |

**Table 4**

| | Comparative Preparation Example No. | | | | | | |
|---|---|---|---|---|---|---|---|
| | 1 | 2 | 3 | 4 | 5 | 6 | 7 |
| High-rigid ionomer resin | | | | | | | |
| ① Hardness (Shore D-scale hardness) | 63 | 63 | 65 | 63 | 61 | 63 | |
| ② Stiffness (MPa) | 340 | 340 | 410 | 340 | 260 | 340 | |

| Soft ionomer resin | | | | | | | |
|---|---|---|---|---|---|---|---|
| ① Hardness (Shore D-scale hardness) | 36 | 36 | 36 | 45 | 26 | | |
| ② Stiffness (MPa) | 26 | 26 | 26 | 55 | 17 | | |

| Composition for cover: | | | | | | | |
|---|---|---|---|---|---|---|---|
| ① Hardness (Shore D-scale hardness) | 57 | 50 | 48 | 57 | 48 | 63 | 47 |
| ② Stiffness (MPa) | 160 | 90 | 90 | 120 | 90 | 340 | 250 |

### (3) Production of golf ball

A thread wound golf ball was obtained by molding a semi-spherical half-shell from the cover composition of the above item (2), covering the core of the item (1) with two half-shells and then subjecting to a press molding in a die for the golf ball. The thread wound golf ball was coated with a paint to give a coated golf ball of 42.7 mm in diameter.

The weight, compression, initial velocity and flying distance of the resulting golf balls were measured. The ball compression was measured by PGA method, and the ball initial velocity was measured by R & A initial velocity measuring method. The flying distance was measured by hitting with a No. 1 wood club at a head speed of 45 m/second, using a swing robot manufactured by True Temper Co.

Further, the shot feel and control properties of the resulting golf ball were evaluated by 10 top professional golfers according to a practical hitting test. The evaluation criteria are as follows. The results shown in the Tables below are based on the fact that not less than 8 out of 10 professional golfers evaluated with the same criterion about each test item.

### Evaluation criteria:

- o:: Good, shot feel and control properties are similar to those of the golf ball with the balata cover.
- △:: Control properties are similar to those of the golf ball with the balata cover, but shot feel is quite different from that of the golf ball with the balata cover, that is, it is too heavy, which results in too strong impact, or it is too soft, which results in heavy feeling.
- X:: Both shot feel and control properties are inferior.

In Table 5, the weight, compression, initial velocity, flying distance, shot feel and control properties of the golf balls of Examples 1 to 7, and the kind of the composition for the cover used in the production of the golf ball are shown. In Table 6, the weight, compression, initial velocity, flying distance, shot feel and control properties of the golf balls of Comparative Examples 1 to 6, and the kind of the composition for the cover used in the production of the golf ball are shown. The kind of the composition for the cover is shown by Preparation Example No. or Comparative Preparation Example No.

The golf ball of Comparative Example 6 is a standard thread wound golf ball with the ionomer cover wherein only a high-rigid ionomer resin is used as the base resin of the cover, and the golf ball of Comparative Example 7 is a standard thread wound golf ball with the balata cover wherein only a balata (transpolyisoprene) cover is used, which are golf balls for a criterion of comparison.

**Table 5**

| | Example No. | | | | | | |
|---|---|---|---|---|---|---|---|
| | 1 | 2 | 3 | 4 | 5 | 6 | 7 |
| Composition for cover (Preparation Example) | No. 1 | No. 2 | No. 3 | No. 4 | No. 5 | No. 6 | No. 7 |
| Ball weight (g) | 45.4 | 45.3 | 45.3 | 45.4 | 45.4 | 45.4 | 45.4 |
| Ball compression | 86 | 86 | 87 | 88 | 88 | 88 | 88 |
| Ball initial velocity (feet/second) | 252.7 | 252.8 | 252.9 | 253.0 | 252.8 | 253.0 | 252.8 |
| Flying distance (yard) | 228 | 229 | 229 | 230 | 228 | 230 | 229 |
| shot feel and control properties | o | o | o | o | o | o | o |

**Table 6**

| | Comparative Example No. | | | | | | |
|---|---|---|---|---|---|---|---|
| | 1 | 2 | 3 | 4 | 5 | 6 | 7 |
| Composition for cover (Preparation Example) | No. 1 | No. 2 | No. 3 | No. 4 | No. 5 | No. 6 | No. 7 |
| Ball weight (g) | 45.4 | 45.3 | 45.3 | 45.4 | 45.4 | 45.4 | 45.4 |
| Ball compression | 88 | 86 | 86 | 88 | 86 | 92 | 88 |
| Ball initial velocity (feet/second) | 251.0 | 250.8 | 250.7 | 251.0 | 251.7 | 253.0 | 251.0 |
| Flying distance (yard) | 223 | 222 | 222 | 223 | 224 | 230 | 223 |
| shot feel and control properties | △ | △ | △ | △ | △ | X | o |

As is apparent from the results shown in Tables 5 and 6, all of the golf balls of Examples 1 to 7 had excellent shot feel and control properties similar to those of the golf ball with the balata cover, and the flying distance attained to a satisfactory level.

The golf balls of Examples 1 to 7 of the present invention are those in which the mixture of resin (A), the high-rigid ionomer resin and resin (B) the low-hardness copolymer resin having a specific structure are used as the base resin for the cover. All of the golf balls of Examples 1 to 7 had excellent shot feel and control properties similar to those of the golf ball of Comparative Example 7 as the normal balata cover thread wound golf ball. Further, the golf balls of Examples 1 to 7 attained the flying distance of 228 to 230 yards, which is almost the same as that of the golf ball of Comparative Example 6 as the normal thread wound golf ball with the ionomer cover, and thus the flying distance attained to a satisfactory level.

On the other hand, the golf balls of Comparative Examples 1 to 4 wherein a combination of the high-rigid ionomer resin and soft ionomer resin (e.g. Surlyn AD8269, Surlyn AD8265, etc.) was used as the base resin for the cover according to prior art and the golf ball of Comparative Example 5 wherein a combination of the normal ionomer resin having comparatively low rigidity and low-hardness copolymer resin was used as the base resin for the cover showed control properties similar to those of the golf ball with the balata cover, but the shot feel was inferior. Also, the flying distance was 222 to 224 yards, which was considerably inferior in comparison with the golf balls of Examples 1 to 7.

Further, the golf ball of Comparative Example 6 as the normal thread wound golf ball with the ionomer cover showed hard shot feel and had inferior control properties. The golf ball of Comparative Example 7 as the normal thread wound golf ball with the balata cover was superior in shot feel and control properties. However, the flying distance was 223 yards, which was considerably inferior in comparison with the golf balls of Examples 1 to 7.

Furthermore, in order to examine the cut resistance of the golf balls of the Examples 1 to 7 and Comparative Examples 1 to 7, the top part of the golf ball was hit at a head speed of 30 m/second using a swing robot mounted with a pitching wedge manufactured by True Temper Co. to examine whether a cut mark arose or not.

No cut mark arose in the golf balls of the Examples 1 to 7 and the Comparative Examples 6, but a small cut mark arose in the golf balls of the Comparative Examples 1 to 5 and, further, a large cut mark which can not stand use arose in the golf ball of Comparative Example 7 as the normal balata cover thread wound golf ball.

### Examples 8 to 14 and Comparative Examples 8 to 13 (Two-piece solid golf ball)

### (1) Preparation of core

A rubber composition prepared by formulating 36 parts by weight of zinc acrylate, 20 parts by weight of zinc oxide, 1.2 parts by weight of dicumyl peroxide and 0.5 parts by weight of an antioxidant [Yoshinox 425 (trade name), manufactured by Yoshitomi Pharmaceutical Industries Ltd.] in 100 parts by weight of a polybutadiene rubber [BR-11 (trade name), manufactured by Japan Synthetic Rubber Co., Ltd.] was subjected to a vulcanization molding at 160°C for 25 minutes to give a solid core. The average diameter of the solid core thus obtained was 38.2 mm.

### (2) Preparation of composition for cover

The pelletized compositions for the cover prepared in Preparation Examples 1 to 7 and Comparative Preparation Examples 1 to 6 were used.

### (3) Production of golf ball

The composition for the cover obtained in the above item (2) was coated on the solid core obtained in the above item (1) by an injection molding to give a coated golf ball of 42.7 mm in diameter.

The weight, compression, initial velocity and flying distance of the golf balls thus obtained were measured and, further, the shot feel and the control properties were examined.

In Table 7, the weight, compression, initial velocity, flying distance, shot feel and the control properties of the golf balls of Examples 8 to 14, and the kind of the composition for the cover used in the production of the golf ball are shown. In Table 8, the weight, compression, initial velocity, flying distance, shot feel and control properties of the golf balls of Comparative Examples 8 to 13, and the kind of the composition for the cover used in the production of the golf ball are shown. The kind of the composition for the cover is shown by Preparation Example No. or Comparative Preparation Example No.

The golf ball of Comparative Example 13 is a standard two-piece solid golf ball wherein only the high-rigid ionomer resin was used as the base resin of the cover, and is for comparison with the golf balls of the present invention. Further, the measuring methods of various physical properties and the evaluation methods of the shot feel and the control properties are the same as those used in the Examples 1 to 7.

**Table 7**

| | Example No. | | | | | | |
|---|---|---|---|---|---|---|---|
| | 8 | 9 | 10 | 11 | 12 | 13 | 14 |
| Composition for cover (Preparation Example) | No. 1 | No. 2 | No. 3 | No. 4 | No. 5 | No. 6 | No. 7 |
| Ball weight (g) | 45.4 | 45.3 | 45.3 | 45.4 | 45.4 | 45.4 | 45.4 |
| Ball compression | 90 | 90 | 91 | 92 | 92 | 92 | 92 |
| Ball initial velocity (feet/second) | 253.0 | 253.1 | 253.1 | 253.2 | 253.1 | 253.2 | 253.1 |
| Flying distance (yard) | 230 | 231 | 231 | 232 | 231 | 232 | 231 |
| shot feel and control properties | o | o | o | o | o | o | o |

**Table 8**

| | Comparative Example No. | | | | | |
|---|---|---|---|---|---|---|
| | 8 | 9 | 10 | 11 | 12 | 13 |
| Composition for cover (Preparation Example) | No. 1 | No. 2 | No. 3 | No. 4 | No. 5 | No. 6 |
| Ball weight (g) | 45.4 | 45.3 | 45.3 | 45.4 | 45.4 | 45.4 |
| Ball compression | 92 | 90 | 90 | 92 | 90 | 103 |
| Ball initial velocity (feet/second) | 251.6 | 251.3 | 251.2 | 251.7 | 252.0 | 253.3 |
| Flying distance (yard) | 226 | 225 | 225 | 226 | 227 | 233 |
| shot feel and control properties | △ | △ | △ | △ | △ | X |

As is apparent from the results shown in Tables 7 and 8, the two-piece solid golf balls of Examples 8 to 14 of the present invention were superior in shot feel control properties and flying performance, similar to the thread wound golf balls of the Examples 1 to 7.

The golf balls of Examples 8 to 14 attained the flying distance of 230 to 232 yards, which is almost the same as that of the golf ball of Comparative Example 13 wherein only the high-rigid ionomer resin was used as the base resin for the cover, and were superior in flying distance. Further, the golf balls of Examples 8 to 10 were superior in shot feel and control properties.

Regarding the golf balls of the Examples of 8 to 14, the cut resistance was examined, similar to the Examples 1 to 7. No cut marks arose and the golf balls of the Examples of 8 to 14 were thus superior in cut resistance.

The golf ball of Comparative Example 13 was superior in flying performance and cut resistance, but the shotfeel and the control properties were inferior. The golf balls of the Comparative Examples 8 to 12 were not inferior in shot feel and control properties, but the flying distance was 3 to 6 yards inferior in comparison with the golf balls of the Examples 8 to 14.

## Claims

1. A golf ball having a core and a cover for coating the core, characterised in that the cover comprises a base resin comprising a mixture of a resin (A) and a resin (B), the cover having a Shore D-scale hardness and a stiffness of from 40 to 55 and 130 to 300 MPa respectively,
wherein resin (A) comprises an ionomer resin obtained by neutralizing at least a part of carboxyl groups in a copolymer of an α-olefin and an α,β-unsaturated carboxylic acid having from 3 to 8 carbon atoms with a metal ion or a mixture thereof, resin (A) having a Shore D-scale hardness and a stiffness of from 60 to 70 and 300 to 500 MPa respectively,
and wherein resin (B) comprises a low-hardness copolymer resin comprising an α-olefin, an α,β-unsaturated carboxylic ester having from 3 to 8 carbon atoms and a polymerizable monomer containing a carboxyl group or a carboxylic anhydride group as an essential monomer component, resin (B) having a Shore D-scale hardness of from 5 to 30.

2. A golf ball as claimed in claim 1, wherein resin (A) is a mixture of an ionomer resin neutralized with a monovalent metal ion and an ionomer resin neutralized with a divalent metal ion.

3. A golf ball as claimed in claim 1 or claim 2, wherein resin (B) is a terpolymer resin of ethylene, acrylate or methacrylate and acrylic acid or methacrylic acid.

4. A golf ball as claimed in claim 1 or claim 2, wherein resin (B) is a terpolymer resin of ethylene, acrylate or methacrylate and maleic anhydride.

5. A golf ball as claimed in claim 1 or claim 2, wherein resin (B) is a terpolymer resin of ethylene, acrylate or methacrylate and a half ester of a dibasic acid.

6. A golf ball as claimed in any one of claims 1 to 5, wherein the golf ball core is a solid core or thread wound core.

7. A golf ball as claimed in any one of claims 1 to 6, wherein the base resin of the mixture includes a pigment, dispersant, antioxidant, UV absorber, photostabilizer or two or more thereof.

8. A golf ball as claimed in any one of claims 1 to 7, wherein the weight ratio of resin (A) to resin (B) is in the range of from 70:30 to 50:50.

9. A golf ball as claimed in any one of claims 1 to 8, wherein the α-olefin of resin (A) or resin (B) or both thereof is propylene, 1-butene or 1-pentene.

10. A golf ball as claimed in any of claims 1 to 8, wherein the α-olefin of resin (A) or resin (B) or both thereof is ethylene.

## Patentansprüche

1. Golfball mit einem Kern und einer Ummantelung zum Umhüllen des Kerns, dadurch gekennzeichnet, daß die Ummantelung ein Grundharz, umfassend ein Gemisch aus einem Harz (A) und einem Harz (B), umfaßt, die Ummantelung eine Shore-Härte auf der D-Skala von 40 bis 55 bzw. eine Steilheit von 130 bis 300 MPa aufweist,
wobei Harz (A) ein Ionomerharz umfaßt, das durch Neutralisieren wenigstens eines Teils der Carboxylgruppen in einem Copolymer aus einem α-Olefin und einer α,β-ungesättigten Carbonsäure mit 3 bis 8 Kohlenstoffatomen mit einem Metallion oder einem Gemisch davon erhalten wurde, wobei Harz (A) eine Shore-Härte auf der D-Skala von 60 bis 70 bzw. eine Steifheit von 300 bis 500 MPa aufweist, und
wobei Harz (B) ein Copolymerharz mit geringer Härte umfaßt, umfassend ein α-Olefin, einen α,β-ungesättigten Carbonsäureester mit 3 bis 8 Kohlenstoffatomen und als einen wesentlichen Monomerbestandteil ein polymerisierbares Monomer, das eine Carboxylgruppe oder eine Carbonsäureanhydridgruppe enthält, wobei Harz (B) eine Shore-Härte auf der D-Skala von 5 bis 30 aufweist.

2. Golfball nach Anspruch 1, wobei Harz (A) ein Gemisch eines Ionomerharzes, das mit einem einwertigen Metallion neutralisiert wurde, und eines Ionomerharzes, das mit einem zweiwertigen Metallion neutralisiert wurde, ist.

3. Golfball nach Anspruch 1 oder 2, wobei Harz (B) ein Terpolymerharz aus Ethylen, Acrylat oder Methacrylat und Acrylsäure oder Methacrylsäure ist.

4. Golfball nach Anspruch 1 oder 2, wobei Harz (B) ein Terpolymerharz aus Ethylen, Acrylat oder Methacrylat und Maleinsäureanhydrid ist.

5. Golfball nach Anspruch 1 oder 2, wobei Harz (B) ein Terpolymerharz aus Ethylen, Acrylat oder Methacrylat und einem Halbester einer zweibasigen Säure ist.

6. Golfball nach einem der Ansprüche 1 bis 5, wobei der Golfballkern ein massiver Kern oder gewickelter Kern ist.

7. Golfball nach einem der Ansprüche 1 bis 6, wobei das Grundharz des Gemischs ein Pigment, Dispergiermittel, Antioxidans, UV-Absorptionsmittel, Photostabilisator oder zwei oder mehrere davon einschließt.

8. Golfball nach einem der Ansprüche 1 bis 7, wobei das Gewichtsverhältnis von Harz (A) zu Harz (B) im Bereich von 70:30 bis 50:50 liegt.

9. Golfball nach einem der Ansprüche 1 bis 8, wobei das α-Olefin von Harz (A) oder Harz (B) oder von beiden Propylen, 1-Buten oder 1-Penten ist.

10. Golfball nach einem der Ansprüche 1 bis 8, wobei das α-Olefin von Harz (A) oder Harz (B) oder von beiden Ethylen ist.

## Revendications

1. Balle de golf ayant un noyau et un organe de recouvrement du noyau, caractérisée en ce que l'organe de recouvrement contient une résine de base qui comprend un mélange d'une résine (A) et d'une résine (B), l'organe de recouvrement ayant une dureté sur l'échelle Shore D et une rigidité comprises respectivement entre 40 et 55 et entre 130 et 300 MPa,
dans laquelle la résine (A) est une résine ionomère obtenue par neutralisation d'au moins une partie des groupes carboxyles d'un copolymère d'une oléfine α et d'un acide carboxylique à insaturation en α,β ayant 3 à 8 atomes de carbone par un ion métallique, ou un mélange d'une telle résine, la résine (A) ayant une dureté sur l'échelle Shore D et une rigidité respectivement comprises entre 60 et 70 et entre 300 et 500 MPa respectivement, et
la résine (B) est une résine d'un copolymère de faible dureté contenant une oléfine α, un ester carboxylique à insaturation en α,β comprenant 3 à 8 atomes de carbone, et d'un monomère polymérisable contenant un groupe carboxyle ou anhydride carboxylique comme ingrédient monomère essentiel, la résine (B) ayant une dureté sur l'échelle Shore D comprise entre 5 et 30.

2. Balle de golf selon la revendication 1, dans laquelle la résine (A) est un mélange d'une résine ionomère neutralisée par un ion métallique monovalent et d'une résine ionomère neutralisée par un ion métallique bivalent.

3. Balle de golf selon la revendication 1 ou 2, dans laquelle la résine (B) est une résine de terpolymère d'éthylène, d'acrylate ou de méthacrylate et d'acide acrylique ou méthacrylique.

4. Balle de golf selon la revendication 1 ou 2, dans laquelle la résine (B) est une résine d'un terpolymère d'éthylène, d'un acrylate ou méthacrylate, et d'anhydride maléique.

5. Balle de golf selon la revendication 1 ou 2, dans laquelle la résine (B) est une résine d'un terpolymère d'éthylène, d'un acrylate ou méthacrylate, et d'un hémiester d'un acide dibasique.

6. Balle de golf selon l'une quelconque des revendications 1 à 5, dans laquelle le noyau est un noyau solide ou à enroulement de fil.

7. Balle de golf selon l'une quelconque des revendications 1 à 6, dans laquelle la résine de base du mélange contient un pigment, un agent dispersant, un antioxydant, un agent absorbant l'ultraviolet, un agent stabilisant à la lumière ou au moins deux de ces ingrédients.

8. Balle de golf selon l'une quelconque des revendications 1 à 7, dans laquelle le rapport pondéral de la résine (A) et de la résine (B) est compris entre 70/30 et 50/50.

9. Balle de golf selon l'une quelconque des revendications 1 à 8, dans laquelle l'oléfine α de la résine (A) ou de la résine (B) ou des deux est le propylène, le 1-butène ou le 1-pentène.

10. Balle de golf selon l'une quelconque des revendications 1 à 8, dans laquelle l'oléfine α de la résine (A) ou de la résine (B) ou des deux est l'éthylène.
